# EUROPEAN PATENT APPLICATION

(11) **EP 2 554 840 A1**
(43) Date of publication of application: **06.02.2013**
(21) Application number: 11382265.4
(22) Date of filing: 03.08.2011
(51) Int. Cl.: F03D 11/00

(54) **Shadow flicker measurement system, wind turbine comprising such a system, and method using such a system**

(71) Applicant: Alstom Wind, S.L.U., 08005 Barcelona (ES)
(72) Inventor: Acosta Farnós, Xavier, 08005 BARCELONA (ES); Garcia Garces, Pedro, 08005 BARCELONA (ES); Gracia Suberviola, Raul, 08005 BARCELONA (ES)
(74) Representative: ZBM Patents

(57) **Abstract**

A shadow flicker measurement system comprising a sun blocking element and a light sensor, wherein at least one of said sun blocking element and said light sensor is rotatable, such that upon rotation, the relative positions of the sun blocking element and the light sensor substantially continuously change between a first arrangement in which the light sensor can be directly irradiated by the sun and a second arrangement in which the light sensor cannot be directly irradiated by the sun due to the sun blocking element. The invention further relates to a method for operating a wind turbine, a wind turbine hub and a wind turbine.

## Description

The present invention relates to a shadow flicker measurement system for a wind turbine and a wind turbine comprising such a shadow flicker measurement system. It further relates to a method of operating a wind turbine in connection with controlling the shadow flicker of the wind turbine.

### BACKGROUND ART

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft either directly drives the generator rotor ("directly driven") or through the use of a gearbox.

Shadow flicker is a phenomenon that is caused by a rotating rotor casting intermittent shadows. If these intermittent shadows reach onto an object (such as e.g. a house or another building) that is located in the vicinity of the wind turbine, this may be perceived as disturbing. Shadow flicker may thus be an important criterion taken into account when determining where wind turbines may be placed. With the increasing size of wind turbines, and rotor blades in particular, the shadows cast by these blades are of course also increasing. Shadow flicker may thus reduce the suitable areas for placement of wind turbines.

Shadow flicker does not necessarily always affect all houses in the vicinity. Throughout the year, and throughout a day, as the position of the sun relative to a wind turbine changes there may be moments in which shadows may potentially be cast onto a nearby house or other object. Whether there actually are shadows or not, may depend e.g. on the presence of clouds. At other moments, due to the relative positions of sun, wind turbine and the object in question, shadows may occur but shadow flicker is not a problem, because the shadows do not bother anyone.

Given the locations of the wind turbine and the object and given the date and time of day, it can be determined whether shadow flicker in that particular moment could be a problem or not. It then depends upon the weather conditions (e.g. presence of clouds or mist) whether or not shadow flicker actually takes place or not.

It is known from the prior art to interrupt the operation of a wind turbine whenever shadow flicker may be a problem. This however is not an optimal solution as the operation time of the wind turbine may be unnecessarily reduced and electricity that could be generated on e.g. cloudy days may not be generated, even though shadow flicker would not be a problem.

EP 1 194 690 describes also taking the level of light intensity into account when deciding to interrupt the operation of a turbine. However, it has been found that a simple measurement of light intensity is not very accurate in determining whether shadows are formed or not.

US 7,619,321 describes using three sensors positioned equidistantly along the circumference of a wind turbine tower. Light intensities measured by the three sensors may be compared in order to determine the difference in intensity between direct light (irradiated directly by the sun) and indirect light (in the shade). It has been found that the difference in light intensity between direct light and indirect light (indirect sun light may also be referred to as diffuse light) is more indicative of whether shadows will actually occur or not. However, in this prior art system, the three sensors are positioned at a certain height of the tower. If they are positioned too low, nearby trees or hills may disturb the measurements, thus rendering them useless. If they are positioned high, access to them and therefore their maintenance is highly complicated.

WO 2009/030252 describes a system wherein a shadow-control system stops a wind turbine, based on a shadow-related shut-down condition. The condition is based on a result of a comparison between a direct-light intensity and an indirect-light intensity being beyond a direct-to-indirect light threshold. For this system, it is assumed that shadow-sensitive objects are normally not positioned within a certain minimum distance from a wind turbine. Consequently, it is assumed that the rotor's intermittent shadow will typically only hit shadow-sensitive objects when the sun's elevation angle is small (and shadows long). For this reason, only an eastward-oriented sensor and a westward oriented sensor are used.

This system on the one hand suffers from the same drawbacks as the system described in US 7,619,321. On the other hand, it can only be used for wind turbines in which disturbing shadow flicker effectively only occurs during sunrise or sunset. Its application is thus limited to wind turbines in specific locations or in particular surroundings.

It is an object of the present invention to provide a shadow flicker measurement system that avoids or reduces one or more of the above-mentioned drawbacks.

### SUMMARY OF THE INVENTION

In a first aspect, a shadow flicker measurement system is provided that comprises a sun blocking element and a light sensor. At least one of the sun blocking element and/or said light sensor is rotatable, such that upon rotation, the relative positions of the sun blocking element and the light sensor substantially continuously change between a first arrangement in which the light sensor can be directly irradiated by the sun and a second arrangement in which the light sensor cannot be directly irradiated by the sun due to the sun blocking element.

In this aspect, a single sensor may be sufficient to measure light intensities in two different situations: a first situation in which it can be directly irradiated by the sun, and a second situation in which it cannot be directly irradiated because a sun blocking element blocks the sun light. In this second situation, only indirect ("diffuse") sun light is thus measured, whereas in the first situation the global solar radiation (both "direct" and "diffuse" light) is measured. Diffuse sun light is the sun light that is reflected by e.g. clouds, water vapour, the ground etc. The difference between these measurements has been found to be a reliable indicator of whether shadows will occur or not. Since both intensities are measured with the same light sensor, the comparison between light intensities is generally more reliable.

In some embodiments, the light sensor may be arranged in a housing with a cover, wherein said cover is rotatable and comprises one or more opaque sections forming the sun blocking element. Said cover may be configured to be set into rotation by the wind. To this end, the cover may comprise e.g. cup-shaped elements, or fins or wings, such that the wind will set the cover into rotation regardless of the wind direction. Alternatively, a motor operationally connected to said cover for setting the cover into rotation may be provided.

In some embodiments, the shadow flicker measurement system may be mounted on a wind turbine nacelle. Access to the system is thus readily available, so that maintenance is facilitated.

In some embodiments, the light sensor may be oriented such as to receive light from a hemisphere above a substantially horizontal plane. The ability to make reliable measurements may thus be substantially unaffected by either the instantaneous orientation of (the nacelle of) the wind turbine, and the instantaneous position of the sun.

In some embodiments, a light sensor may be arranged on the hub. Through rotation of the hub, the hub itself will at occasions block the sun light, such that in those moments, only diffuse light can be measured.

In another aspect, a method for operating a wind turbine substantially as hereinbefore described is provided, the method comprising determining whether due to the instantaneous position of the sun relative to the wind turbine, it is possible that the rotor casts an intermittent shadow onto an object. If this is the case, a first light intensity is determined as the highest value of light intensity measured by the light sensor during a predetermined period of time, and a second light intensity is determined as the lowest light intensity measured during a predetermined period of time. Consequently, it may be determined whether the difference between the first light intensity and the second light intensity is higher than a predetermined threshold. If this is the case, and this measurement is not incidental (due to e.g. a few rays of sun shining through the clouds), the operation of the wind turbine may be interrupted. To exclude an incidental sun ray shutting down operation of the wind turbine, the signal for interrupting the operation of the wind turbine may be generated only after the threshold has been surpassed for an established minimum period of time, or only if the threshold is surpassed a predetermined number of times within a period of time.

In some implementations, the information concerning whether on a specific date and at a specific time a shadow may be cast onto an object may e.g. be stored in a (remote) database or look-up table. Alternatively, such information may be calculated in real-time.

In some embodiments, the predetermined threshold (for difference in intensity of the complete radiation and diffuse light intensities) may be selected from a plurality of thresholds based upon the time of the day. When a more precise control is needed for specific locations, a control may be implemented that takes into account a different threshold for e.g. sunset and sunrise on the one hand, and the rest of the day on the other hand. Alternatively, different thresholds may be provided depending on the date of the year (to take seasonal influences into account) and/or the geographical latitude of the wind turbine in question.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 illustrates the problem of shadow flicker caused by shadows of rotor blades of a wind turbine rotor;
Figures 2a - 2b illustrate a first embodiment of the shadow flicker measurement system according to the present invention;
Figure 3 illustrates a second embodiment of a shadow flicker measurement system according to the present invention;
Figures 4a - 4b illustrate a third embodiment of a shadow flicker measurement system according to the present invention;
Figures 5a - 5b illustrate a fourth embodiment of a shadow flicker measurement system according to the present invention;
Figure 6 illustrates a method of operating a wind turbine according to an embodiment of the invention.

### DETAILED DESCRIPTION OF EMBODIMENTS

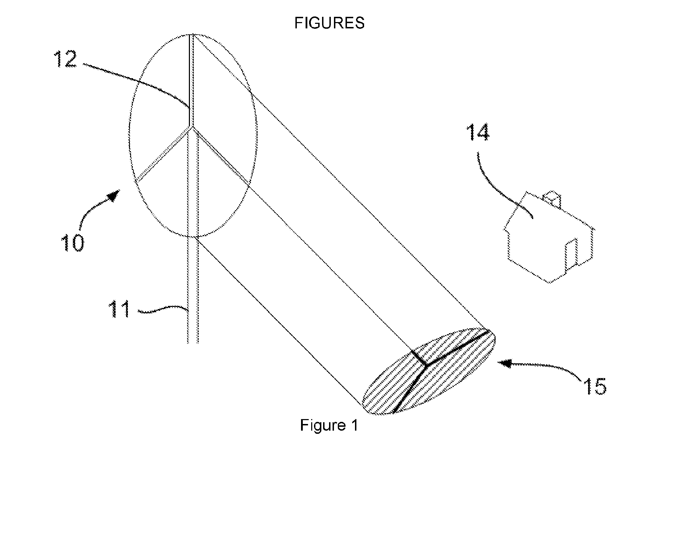

Figure 1 illustrates the phenomenon of shadow flicker that may be caused by rotor blades of wind turbines. In this case, a wind turbine 10 is shown that comprises a tower 11 and a rotor with three blades 12. If the sun light is bright enough, a clear shadow 15 of the rotor will be formed on the ground in the relative vicinity of the wind turbine.

Throughout the day and throughout the year, the area of the shadow and position of the shadow will vary. For example, at sunrise, when the sun's elevation angle is small, long shadows may be cast in a westward direction. However, at sunset, long shadows may be cast in a substantially eastwards direction. In the middle of the day, shorter shadows will occur and their direction will change continuously throughout the day. As such, an area in which shadows may occur throughout the day can be determined for any wind turbine, taking into account geographic location of the turbine, the rotor size and the date of the year.

If an object, such as e.g. a house 14, is placed within such a determined area surrounding the wind turbine, the shadow cast by the rotor may fall upon the house. In operation, the rotor blades may thus cast intermittent shadows on the house. These intermittent shadows are generally regarded as a nuisance for the residents in the area. It has even been claimed that they may cause health problems.

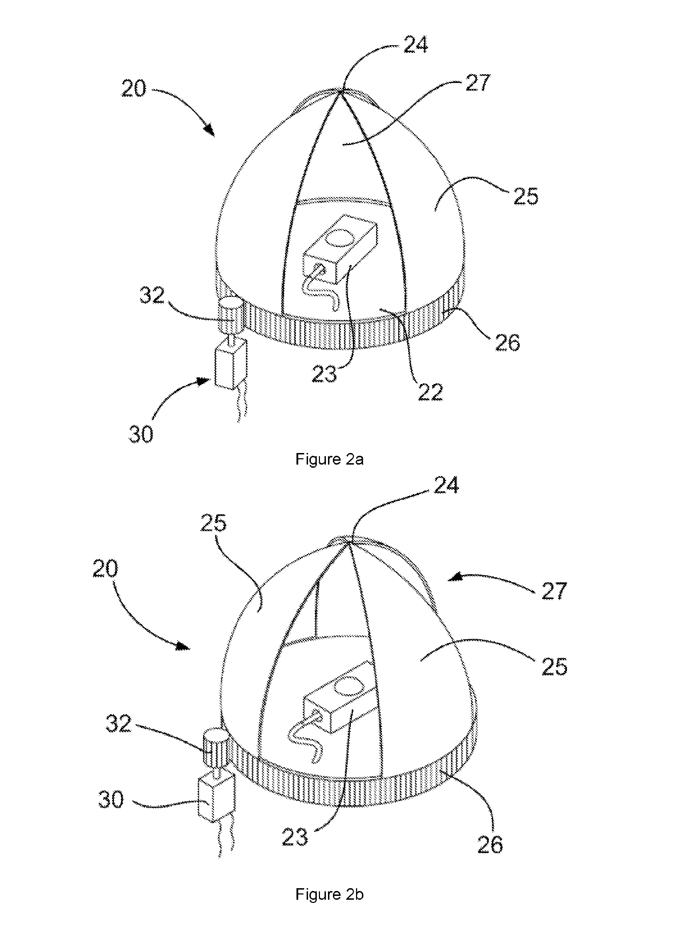

Figures 2a and 2b illustrate a first embodiment of a shadow flicker measurement system 20. A light sensor 23 is provided on the bottom 22 of a housing, which may be substantially dome-shaped. The light sensor is thus arranged to receive light from a hemisphere above the substantially horizontal plane in which it is mounted.

A housing cover 24 may comprise one or more substantially opaque sections 25, and one or more substantially transparent sections 27. The cover 24 may be rotatable with respect to bottom 22 through a suitable bearing (not shown).

Operationally connected to the cover 24 is a motor 30. Power for the motor 30 may be provided by a battery (not shown). An annular gear 26 may be provided substantially at the bottom of cover 24. A pinion 32 that may be directly (or e.g. through a reductor) driven by motor 30 may set the cover 24 into rotation. Depending on the instantaneous position of the cover 24, the light sensor 23 can be directly irradiated or not. Figure 2b illustrates the same system, but with the cover in a slightly different angular position.

Using a single light sensor, a difference between two light intensities may thus be determined depending on the instantaneous position of a sun blocking element relative to the sensor. In a first arrangement, the light sensor may measure the global radiation (i.e. both direct radiation and diffuse radiation) of a hemisphere defined above the plane of the sensor. In a second arrangement, the light sensor may measure only the diffuse radiation.

Based on a difference in measured light intensities (either relative or absolute), the likeliness of the presence of shadows can be determined.

The shadow flicker measurement system thus described may e.g. be mounted on a wind turbine nacelle. Maintenance is thus facilitated, since easy access is provided. At the same time, because of the height of the nacelle, it is unlikely that nearby trees or e.g. hills can influence the measurements. Alternatively, the system may be mounted op top of a pole in a wind park. The pole however should be in the relative vicinity of a wind turbine that has a rotor that may cast intermittent shadows upon an object, such that the measurements at the pole may be considered representative for the wind turbine in question.

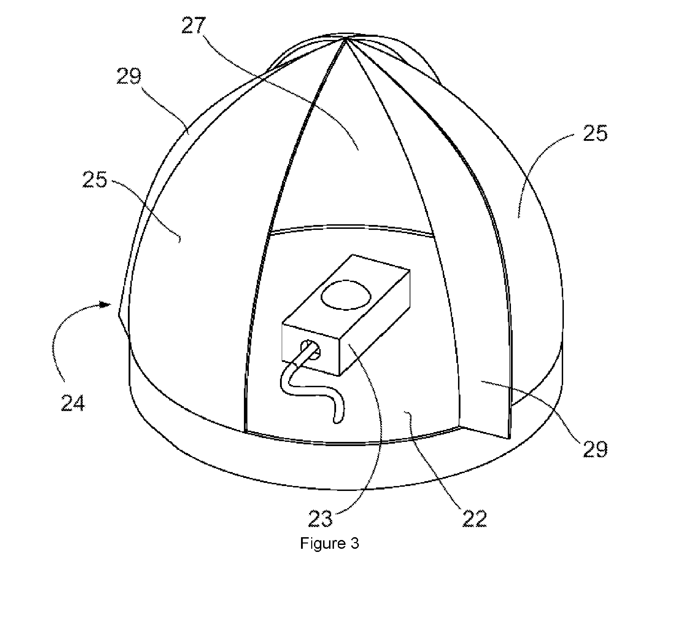

Figure 3 illustrates another embodiment of a shadow flicker measurement system. This embodiment is largely based on the same elements and principles explained with reference to figure 2. A cover 24 comprises a number of opaque sections 25 and a number of transparent sections 27. Depending on the relative position of the light sensor 23 and the cover 24, the light sensor may either be directly irradiated or not.

A difference with the previously shown embodiment is that the method of setting the cover into rotation is different: a plurality of fins 29 is attached to cover 24 that catch wind. The cover 24 may thus be set into rotation without the need for any power supply. In alternative embodiments, e.g. cup-shaped may be used to achieve the same effect.

In the embodiments of figures 2 and 3, the cover in each case comprises three opaque sections. It will be clear that both the number of opaque sections and their size may be varied, as long as measurements can be made sufficiently well for both arrangements: when the opaque section blocks the direct sun light, and when it does not.

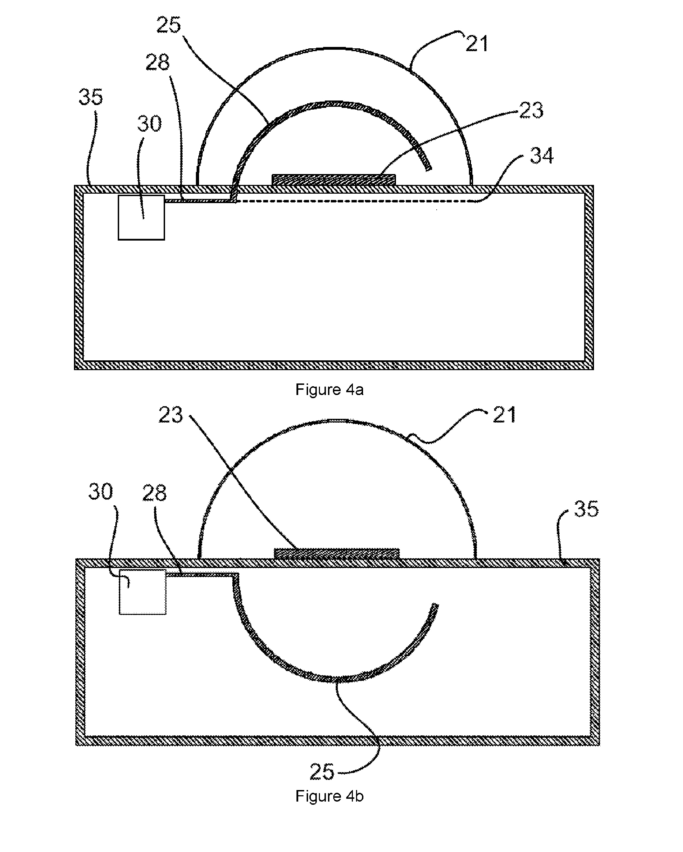

Figures 4a and 4b illustrate a third embodiment of a shadow flicker measurement system. A shadow flicker measurement system according to this embodiment may comprise a bottom casing 35, on top of which a substantially transparent dome-shaped cover is provided. A sensor 23 is arranged underneath the cover 21. A rotatable sun blocking element comprising a shaft 28 along an axis of rotation 34, and a spherical cap 25 at the end of the shaft. A motor 30 is housed within bottom casing 35 and is operationally connected to shaft 28 to set it into rotation. A battery (not shown) may function as a power supply for motor 30.

Figure 4b illustrates the same elements with the sun blocking element in a different position. In figure 4a, the light sensor cannot be directly irradiated and the sensor will thus only measure diffuse light. In the arrangement of figure 4b however, it can be directly irradiated and it will measure both direct and diffuse light.

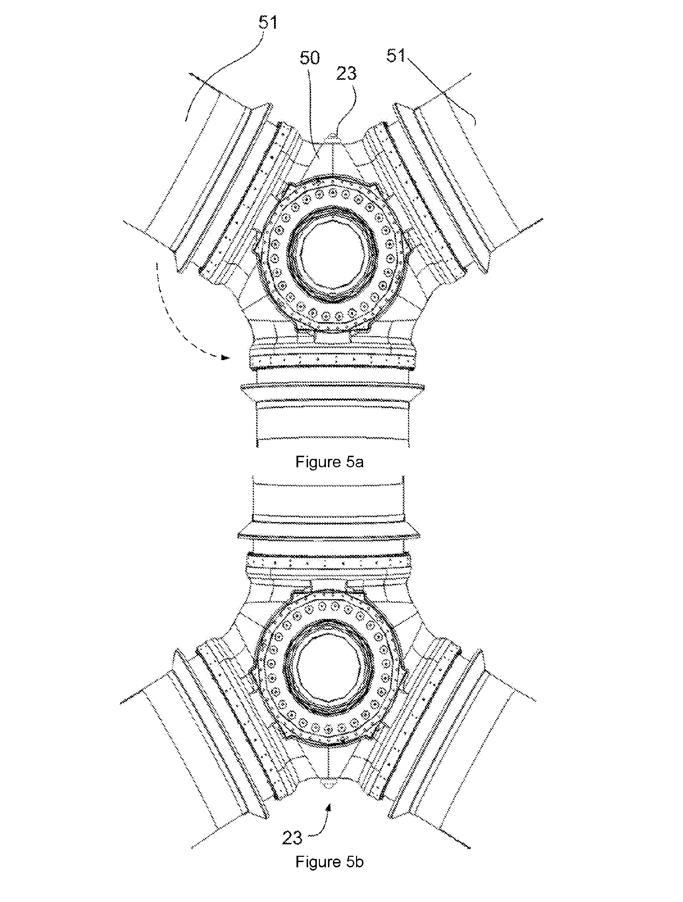

Figures 5a and 5b illustrate yet a further embodiment. In this embodiment, a wind turbine may comprise a hub 50 and a plurality of blades 51 attached at the hub. A light sensor 23 may be located substantially between two blades 51. In the angular position shown in figure 5a, the light sensor may be directly irradiated by the sun (depending on the relative position of the sun). In figure 5b, the hub itself may function as a sun blocking element, such that the light sensor may only measure diffuse light.

Depending on the precise dimensions of the rotor hub and nacelle, the light sensor may e.g. be provided on a platform that is arranged slightly elevated with respect to the hub.

Whereas the systems generally described in figures 2 - 4 may advantageously be positioned e.g. on a wind turbine nacelle or on a pole, the system according to figure 5 is generally provided on a wind turbine rotor hub. Also in this embodiment easy access for maintenance is thus provided.

Measurements made by the light sensor in these various embodiments may be transmitted through suitable cables to a wind turbine control system. It will be clear that any kind of suitable light sensor may be used, such as e.g. pyronameters. The operation of the light sensor that is employed may be based e.g. on any of photodiodes, thermopiles, phototubes, photoresistors, and photomultiplier tubes.

In order to avoid snow stuck on the sensor or its surrounding housing affecting the reliability of the measurements, the sensor itself, its housing / casing or e.g. the cover may comprise a heating element for melting any snow.

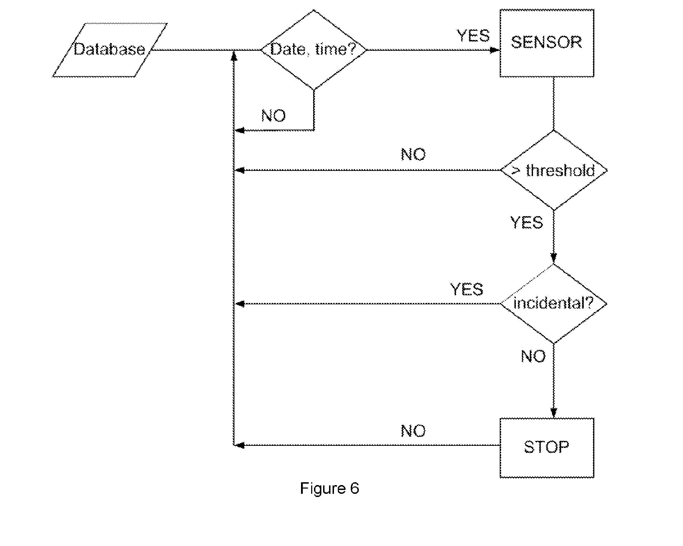

Figure 6 illustrates a method of operating a wind turbine according to an embodiment of the invention. According to this embodiment, a database comprising relevant data for a wind turbine concerning (for each day of the year,) at which time of the day, an intermittent shadow may be cast on e.g. a house.

The current date and time may be compared with the registered dates and times in the database. If at a particular moment, it is possible that shadows may be cast on an object, a comparison may be made between the light intensities measured by light sensor in the two different relative arrangements of light sensor and sun blocking element: a first situation in which it can be directly irradiated by the sun, and a second situation in which it cannot be directly irradiated. If the difference in light intensities is higher than a predetermined threshold, a signal could be generated for interrupting the operation of the wind turbine. If the difference in light intensities is below a threshold value, operation of the wind turbine does not need to be interrupted, since shadows are not present. It has been found that the difference in intensities between direct and indirect light is indicative of the presence of shadows.

In this method, the signal for interrupting the operation of the wind turbine may be generated particularly if this situation is not incidental. For example, the wind turbine operation is only interrupted after the threshold has been surpassed for an established minimum period of time (for example 1 minute, or a few minutes), or is only interrupted if the threshold is surpassed a predetermined number of times within a period of time. This could be the case on a day wherein cloudy and sunny moments alternate.

The threshold used in this comparison may be an absolute value of illuminance (in luxes, or lumens) or irradiance (W/m²), or may be a relative value, e.g. a percentage.

Instead of looking up relevant data about shadows potentially being cast on an object, these data may also be calculated in real-time. These calculations may be calculated either at a wind turbine level, or remotely, at a central control level.

Upon installation of a wind turbine, the system may be calibrated by adapting particularly the value of the threshold. In some implementations, it may be desirable to make the system more sensitive during e.g. sunset and sunrise than during the rest of the day. In these implementations, a plurality of thresholds may be predefined, and e.g. in accordance with the time of day, the suitable threshold may be selected. Alternatively, different thresholds may be provided depending on the date of the year (to take seasonal influences into account) and/or the geographical latitude of the wind turbine in question.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. A shadow flicker measurement system comprising a sun blocking element and a light sensor, wherein
at least one of said sun blocking element and said light sensor is rotatable, such that upon rotation, the relative positions of the sun blocking element and the light sensor substantially continuously change between a first arrangement in which the light sensor can be directly irradiated by the sun and a second arrangement in which the light sensor cannot be directly irradiated by the sun due to the sun blocking element.

2. A system according to claim 1, adapted to generate a signal indicating the presence of shadows when the difference in light intensity measured by the light sensor in the first arrangement and the light intensity measured by the light sensor in the second arrangement is higher than a predetermined threshold.

3. A system according to claim 2, wherein the predetermined threshold is selected from a plurality of thresholds.

4. A system according to any of claims 1 - 3, wherein said light sensor is oriented such as to receive light from a hemisphere above a substantially horizontal plane.

5. A system according to any of claims 1 - 4, wherein the light sensor is arranged in a housing with a cover, wherein said cover is rotatable and comprises one or more opaque sections forming the sun blocking element.

6. A system according to claim 5, wherein said cover is configured to be set into rotation by the wind.

7. A system according to claim 5, further comprising a motor operationally connected to said cover for setting the cover into rotation.

8. A system according to any of claims 1 - 4, wherein the light sensor is arranged in a housing, and an opaque element is rotatably arranged within said housing and further comprising a motor operationally connected with the opaque element for setting it into rotation.

9. A wind turbine comprising a nacelle and a system according to any of claims 1 - 8, wherein said system is mounted on the nacelle.

10. A wind turbine hub comprising a system according to any of claims 1 - 3, wherein said light sensor is arranged on the wind turbine hub, the wind turbine hub forming the sun blocking element.

11. A wind turbine hub according to claim 10, wherein said light sensor is arranged substantially between two blades of the wind turbine hub.

12. A wind turbine comprising a wind turbine hub according to claim 10 or 11.

13. Method for operating a wind turbine according to claim 9 or 12 comprising
determining whether it is possible, that due to the instantaneous position of the sun relative to the wind turbine, the rotor casts an intermittent shadow onto an object,
in case of positive result,
determining a first light intensity as the highest value of light intensity measured by the light sensor during a predetermined period of time,
determining a second light intensity as the lowest light intensity measured during a predetermined period of time,
determining whether the difference between the first light intensity and the second light intensity is higher than a predetermined threshold, and
in case of positive result,
determining whether this situation is incidental, and
in case of negative result,
interrupting operation of the wind turbine.

14. Method according to claim 13, wherein determining whether it is possible, that due to the instantaneous position of the sun relative to the wind turbine, the rotor casts an intermittent shadow onto an object, comprises obtaining said information from a remote database.

15. Method according to claim 13 or 14, wherein the predetermined threshold is selected from a plurality of thresholds based upon the time of the day and/or the date and/or the geographical latitude.
